# EUROPEAN PATENT APPLICATION

(11) **EP 1 519 436 A1**
(43) Date of publication of application: **30.03.2005**
(21) Application number: 04021160.9
(22) Date of filing: 06.09.2004
(51) Int. Cl.: H01M 8/02, H01M 8/04, H01M 8/24

(54) **Cooling structure for fuel cells**

(30) Priority: 19.09.2003 JP 2003328244
(71) Applicant: NISSAN MOTOR CO., LTD., Yokohama-shi Kanagawa-ken (JP)
(72) Inventor: Isoda, Hiroyuki, Sagamihara-shi Kanagawa-ken (JP); Yanagisawa, Masanari, Yokohama-shi Kanagawa-ken (JP)
(74) Representative: Grünecker, Kinkeldey, Stockmair & Schwanhäusser Anwaltssozietät

(57) **Abstract**

For a fuel cell including a first and a second fuel cell stack (2, 3; 32A, 32B, 32C; 42A, 42B, 42C, 42D) each having a lamination composed of a plurality of laminated cellular fuel cells (9, 10), and held by end plates (7A, 7B, 8A, 8B), a cooling structure has a first cooling circuit (4) provided in a first fuel cell stack (2), a second cooling circuit (5) provided in a second fuel cell stack (3), and a third cooling circuit (14) provided in an end plate (7B) of the first fuel cell stack (2), the third cooling circuit (14) comprising a branched inflow portion (14a; 34a; 44a) and a collecting outflow portion (14b; 35d; 45f) of a coolant, connected to the first and the second cooling circuit (4, 5).

## Description

### BACKGROUND OF THE INVENTION

### 1. FIELD OF THE INVENTION

The present invention relates to a cooling structure for fuel cells.

### 2. RELATED ART

The fuel cell is cooled with a coolant, which is guided to flow in at a coolant inflow portion of the cell, distributed via a network of channels therein, and collected to flow out at a coolant outflow portion of the cell.

If the fuel cell has a potential difference developed between the inflow and outflow portions, associated devices may suffer from current leakage or resultant corrosion.

As a countermeasure, a potential equalizer is known.

Japanese Patent Application Laid-Open Publication No. 2001-155761 has disclosed a cooling structure for fuel cells, in which inflow and outflow pipes of a coolant are respectively provided with conductive meshes contacting the coolant, and the conductive meshes are interconnected by short-circuiting conductors, which in turn are connected by additional conductors to a cell reference terminal, which is grounded by another conductor.

### SUMMARY OF THE INVENTION

This arrangement employs numbers of components, and needs a remarkable number of fabrication steps, with a commensurate cost. The conductors have to be fixed tight to withstand various conditions of use, such as in a traveling vehicle accompanying vibrations.

It is an object of the present invention to provide a cooling structure for fuel cells adapted, with a reduced number of components, to prevent occurrences of a development of potential difference between a coolant inflow portion and a coolant outflow portion of fuel cell.

To achieve the object, according to an aspect of the invention, there is provided a cooling structure for a fuel cell including a first and a second fuel cell stack each having a lamination composed of a plurality of laminated cellular fuel cells, and held by end plates, the cooling structure comprising a first cooling circuit provided in a first fuel cell stack, a second cooling circuit provided in a second fuel cell stack, and a third cooling circuit provided in an end plate of the first fuel cell stack, the third cooling circuit comprising a branched inflow portion and a collecting outflow portion of a coolant, connected to the first and the second cooling circuit.

### BRIEF DESCRIPTION OF THE DRAWINGS

The above and further objects, features, and effects of the present invention will become fully apparent, when the same is read in conjunction with the accompanying drawings, in which:
Fig. 1 is a schematic sectional view of a fuel cell having a cooling structure according to a first embodiment of the invention;
Fig. 2 is a schematic sectional view of a fuel cell having a cooling structure according to a second embodiment of the invention;
Fig. 3 is a schematic sectional view of a fuel cell having a cooling structure according to a third embodiment of the invention; and
Fig. 4 is a schematic a schematic sectional view of a fuel cell having a cooling structure according to a fourth embodiment of the invention.

### DETAILED DESCRIPTION OF THE PREFERRED EMBODIMENTS

There will be detailed below the preferred embodiments of the present invention, with reference to the accompanying drawings. Like elements are designated by like reference characters.

### (First embodiment)

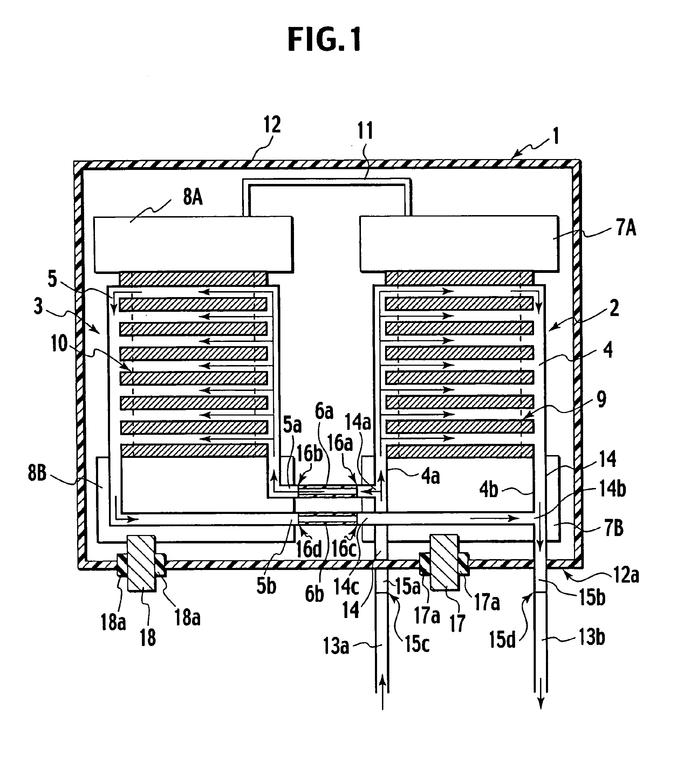

Fig. 1 is a schematic sectional view describing a first embodiment of a fuel cell with a cooling structure 1 according to the present invention.

As shown in Fig. 1, the cooling structure 1 includes a pair of first and second fuel cell stacks 2 and 3 arranged in parallel, first and second cooling circuits 4 and 5 for cooling the fuel cell stacks 2 and 3 respectively, and a third cooling circuit 14 comprising a branched inflow portion 14a and a collecting outflow portion 14b of a coolant, connected to the first and the second cooling circuit 4 and 5, respectively.

The first and the second fuel cell stacks 2 and 3 are respectively provided in the first and second cooling circuits 4 and 5. A coolant (e.g., pure water) flows through the first and second cooling circuits 4 and 5. The first and second fuel cell stacks 2 and 3 are connected to each other through pipes 6a and 6b as pipe members, configured for the second cooling circuit 5 and the third cooling circuit 14 to communicate with each other.

The first and second fuel cell stacks 2 and 3 each having a lamination composed of a plurality of laminated cellular fuel cells 9 and 10 in series, and held by end plates 7A, 7B or 8A, 8B. These end plates 7A, 7B, 8A, and 8B each works as charge collectors and used as an electrodes. The first and second fuel cell stacks 2 and 3 are electrically connected in series, with the end plate 7A and 8A mutually connected by a bus bar 11.

The first and second fuel cell stacks 2 and 3 are accommodated in an electric insulating casing 12, which is made of a heat-resisted resin, keeping the fuel cell stacks 2 and 3 warm, and thermally insulating them from outside.

Outside the casing 12, there are provided a radiator (not shown) for cooling the coolant, and a coolant pump (not shown). The radiator has a coolant recirculation line including supply members 13a, 13b for connection between the radiator and the cooling circuit 14. The coolant flows in members 13a, 13b, which are made of a conductive material, and are insulated therefrom. The members 13a, 13b are respectively connected, at connections 15c and 15d, to an inflow portion 15a and an outflow portion 15b of the third cooling circuit 14 which penetrates the wall 12a of the casing 12. The coolant cooling the first and second fuel cell stacks 2 and 3 which recirculating coolant the radiator flows through the coolant circulating tubes 13a, 13b in a direction indicated by arrows. The coolant circulates through the first, the second, and the third cooling circuits 4, 5, and 14 in the direction indicated by arrows, by drive power of the coolant pump, to cool the first and second fuel cell stacks 2 and 3.

The third cooling circuit 14 is provided on an end plate 7B of the first fuel cell stack 2. The third cooling circuit 14 is connected to the first and second cooling circuits 4 and 5, and includes a branched inflow portion 14a and a collecting outflow portion 14b of a coolant. The third cooling circuit 14 is bifurcated at the inflow portion 14a. One branch is connected to an upstream side 4a of the first cooling circuit 4. The other branched passage is connected to a coolant inflow port 5a of the second cooling circuit 5 through a pipe 6a at connections 16a and 16b. A coolant outflow port 5b of the second cooling circuit 5 is connected to a tube 14c, connected to the collecting outflow portion 14b, through a pipe 6b in connections 16c and 16d. The coolant inflow port 5a and the coolant outflow port 5b are formed in an end plate 8B of the fuel cell stack 3. The pipes 6a and 6b are made of an insulating and resilient silicon resin or the like. The collecting outflow portion 14b is connected to the downstream side 4b of the first cooling circuit 4 and a tube 14c. The coolant having respectively passed through the first and second cooling circuits 4 and 5 are collected in the collecting outflow portion 14b.

The end plate 8B of the second fuel cell stack 3 is connected to a positive polarized terminal 18 provided on the casing 12, and is used as a positive side output terminal. The end plate 7B of the first fuel cell stack 2 is connected to a negative polarized terminal 17 provided on the casing 12, and is used as a negative side output terminal. The positive terminal 18 and the negative terminal 17 are insulated by insulative materials 18a and 17a made of silicon rubber or the like.

According to the cooling structure 1 of the fuel cell of to this embodiment, the coolant supplied to the third cooling circuit 14 from the coolant circulating duct 13 which supplies the coolant through the inflow section 15a is distributed by the branched inflow portion 14a and passes through the end plate 8B of the second fuel cell stack 3 through the coolant inflow port 5a of the second cooling circuit 5 via the pipe 6a. The coolant flows in the second fuel cell stack 3, cooling each cellular fuel cell 10, before it returns to the end plate 8B. Then, the coolant passes through the pipe 6b through the coolant outflow port 5b and circulates in the first cooling circuit 4 in the collecting outflow portion 4b of the cooling circuit 4 formed in the end plate 7B of the first fuel cell stack 2, and are collected where respective flows of the coolant having cooled the first fuel cell stack 2. The collected coolant passes through the outflow section 15b and flows through the coolant circulating tube 13b,to flow of the casing 12.

The first and second fuel cell stacks 2 and 3 are fuel supplied with generation with an electromotive force of about 200V. The first fuel cell stack 2 and the second fuel cell stack 3 are connected in series in this order, the end plate 8B is used as the positive side output terminal, and the end plate 7B is used as the negative side output terminal. Therefore, reference potential of about +400V is applied to the end plate 8B, reference potential of about +200V is applied to the end plate 8A and the end plate 7A, and reference potential of 0V is applied to the end plate 7B. Therefore no potential difference is developed between coolant flows which circulating in the first fuel cell stack 2.

On the other hand, the coolant which circulates in the second fuel cell stack 3 flows through the pipe 6b, and the coolant has a potential difference of about +400V with respect to the reference potential before the coolant enters the end plate 7B. However, if the coolant having circulated in the fuel cell stack 3 is again returned to the end plate 7B which has the reference potential, the potential difference with respect to the reference potential of the coolant becomes 0V. As the potential difference of the coolant between the inflow section 15a and the outflow section 15b is 0V, no potential difference is developed between the outside and the first and second fuel cell stacks 2 and 3, therefore disadvantages, such as corrosion at associated devices can be prevented by the potential difference with respect to outside the casing 12 which accommodates the fuel cell stacks 2 and 3.

As explained above, since the coolant itself is allowed to come into contact with the end plate 7B which is the reference potential section in the casing 12, it is possible to development of a potential difference while reducing the costs and the assembling processes without provision of a special processing nor extra external parts on the casing 12.

Since the pipes 6a and 6b which connect the adjacent first and second fuel cell stacks 2 and 3 are insulative and have resiliency, it is possible to prevent the short circuit of the end plates 7B and 8B and to absorb relative movements between the fuel cell stacks 2 and 3.

### (Second embodiment)

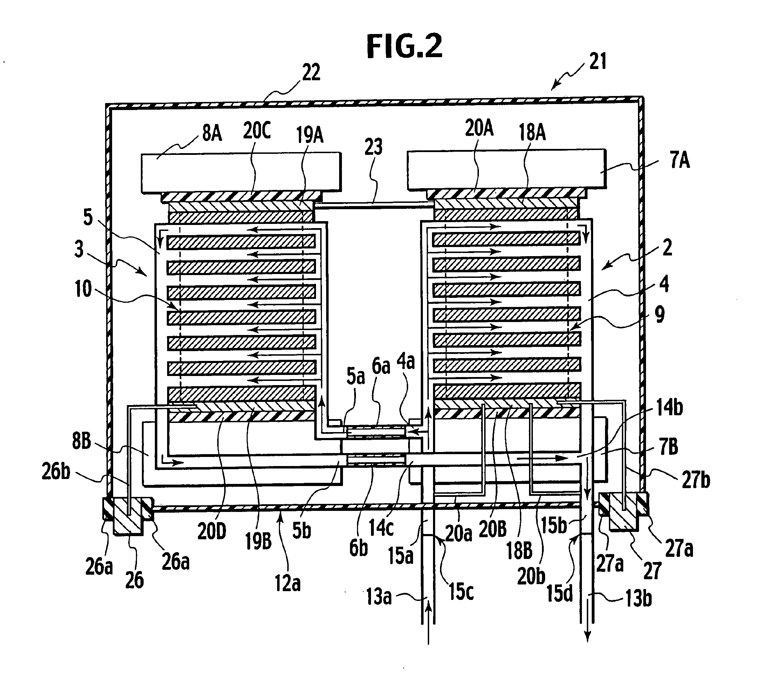

Fig. 2 is a schematic sectional view describing a second embodiment of a fuel cell with a cooling structure 21 of according to the present invention. In the second embodiment, these end plates 7A, 7B, 8A, and 8B are not used as an electrode. In the second embodiment, electrode plates 18A, 18B, 19A, and 19B are disposed between the end plates 7A, 7B, 8A, and 8B and lamination composed of a plurality of laminated cellular fuel cells 9 and 10 in series. Insulating plates 20A, 20B, 20C, and 20D are respectively disposed between the end plates 7A, 7B, 8A, and 8B and the electrode plates 18A, 18B, 19A, and 19B. A bus bar 23 is connected between the electrode plates 18A and 19A. The electrode plate 19B is connected to a positive polarized terminal 26 through a bus bar 26b. The electrode plate 18B is connected to a negative polarized terminal 27 through a bus bar 27b. The electrode plate 19B is connected to the inflow section 15a through a bus bar 20a, and is connected to the outflow section 15b through a bus bar 20b, and is short-circuited with the insulative plate 20B.

In the second embodiment, the electrode plate 19B is used as the positive side output terminal, and the electrode plate 18B is used as the negative side output terminal. Therefore, reference potential of about +400V is applied to the electrode plate 19B, reference potential of about +200V is applied to the electrode plate 19A and the electrode plate 18A, and reference potential of 0V is applied to the electrode plate 18B. Therefore no potential difference is developed between the coolant flows which circulating in the first fuel cell stack 2.

According to the second embodiment, it is possible to prevent disadvantages which may be caused by a potential difference with respect to outside the casing 22 which accommodates the first and second fuel cell stacks 2 and 3.

### (Third embodiment)

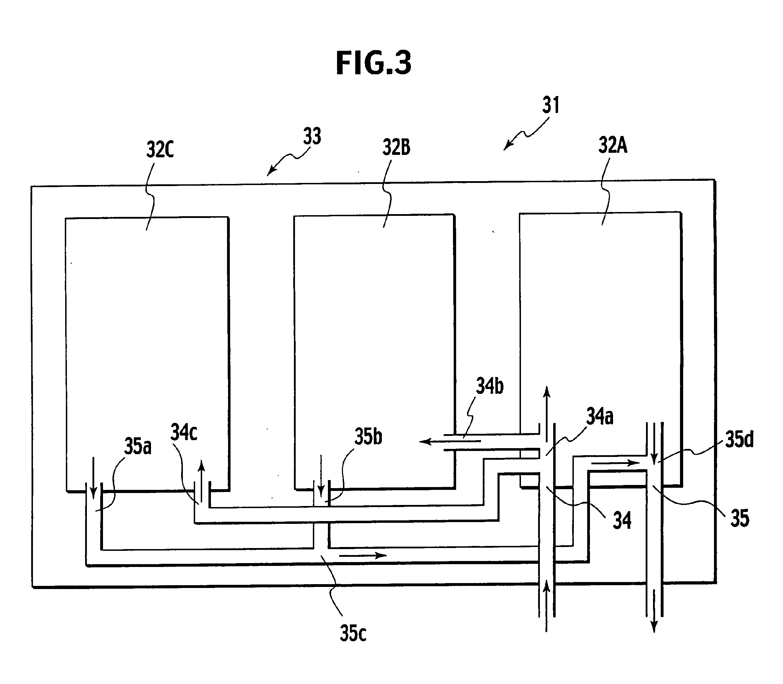

Fig. 3 is a schematic diagram describing a third embodiment of a fuel cell with a cooling structure 31 of according to the present invention. The third embodiment is different from the first and the second embodiments in that three fuel cell stacks are disposed in parallel.

As shown in Fig. 3, according to a cooling structure 31, first, second, and third fuel cell stacks 32A, 32B, and 32C arranged in parallel are accommodated in a casing 33. The first fuel cell stack 32A is provided with an inflow section 34 and an outflow section 35. Coolant which cools the fuel cell stacks 32A, 32B, and 32C flows into the inflow section 34 and flows out from the outflow section 35. The coolant which flows into the first fuel cell stack 32A from the inflow section 34 is distributed into three directions by an inflow portion 34. One of the coolants enters a cooling circuit (not shown) in the first fuel cell stack 32A, and flows in the first fuel cell stack 32A. Another coolant is supplied to the second fuel cell stack 32B from the coolant inflow port 34b. The remaining coolant is supplied to the third fuel cell stack 32C from the coolant inflow port 34c. The coolant flows in the cooling circuit (not shown) in the third fuel cell stack 32C and cools the third fuel cell stack 32C and then, is discharged from the coolant outflow port 35a. The coolant having cooled the second fuel cell stack 32B is discharged from the coolant outflow port 35b, and merges with coolant discharged from the coolant outflow port 35a, and merges with coolant circulated and cooled the first fuel cell stack 32A in the collecting outflow portion 35d in the first fuel cell stack 32A. The collected coolant flows through the outflow section 35 and, flow out of the casing 33. In this case, there are a branched inflow portion 34a a collecting outflow portion 35d of coolant in the first fuel cell stack 32A. Therefore, according to the cooling structure 31, in the inflow section 34 and the outflow section 35, the potential difference of coolant is 0V. Thus, no potential difference is developed between the outside and the first, the second, and the third fuel cell stacks 32A, 32B, and 32C, and disadvantages which may be caused by a potential difference with respect to outside the casing 33 which accommodates the first, the second, and the third fuel cell stacks 32A, 32B, and 32C can be prevented.

### (Fourth embodiment)

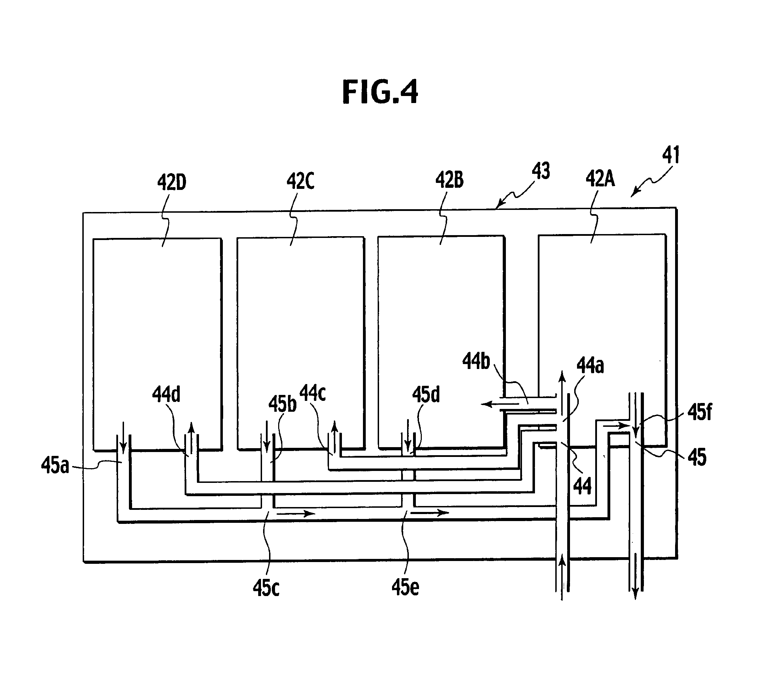

Fig. 4 is a schematic diagram describing a fourth embodiment of a fuel cell with a cooling structure 41 of according to the present invention. The fourth embodiment is different from the first, the second, and the third embodiments in that four fuel cell stacks are disposed in parallel.

As shown in Fig. 4, according to a cooling structure 41 of the fuel cell, first to fourth fuel cell stacks 42A, 42B, 42C, and 42D arranged in parallel are accommodated in a casing 43. The first fuel cell stack 42A is provided with an inflow section 44 and an outflow section 45. The coolant which cools the fuel cell stacks 42A, 42B, 42C, and 42D flows into the inflow section 44 and flows out from the outflow section 45. The coolant having flowed into the first fuel cell stack 42A from the inflow section 44 is distributed by a branched inflow portion 44a into four directions. One of the coolants enters a cooling circuit (not shown) of the first fuel cell stack 42A and flows in the first fuel cell stack 42A. Another coolant is supplied to a second fuel cell stack 42B from a coolant inflow port 44b. Another coolant is supplied to the third fuel cell stack 42C from a coolant inflow port 44c. The remaining coolant is supplied to the fourth fuel cell stack 42D from a coolant inflow port 44d. The coolant flows in the fourth fuel cell stack 42D and cools the fourth fuel cell stack 42D and then, is discharged from a coolant outflow port 45a. The coolant having cooled the third fuel cell stack 42C is discharged from a coolant outflow port 45b, and collects, in a collecting point 45c, with coolant discharged from the coolant outflow port 45a, and the coolant having cooled the second fuel cell stack 42B is discharged from a coolant outflow port 45d and collects, in a collecting point 45e, with the coolant discharged from the coolant outflow ports 45a and 45b, and collects with the coolant flown and cooled the first fuel cell stack 42A at a collecting outflow portion 45f in the first fuel cell stack 42A. The collected coolant flows through the outflow section 45 and flow out of the casing 43. In this case, there are branched inflow portion 44a and a collecting outflow portion 45f for the coolant in the first fuel cell stack 42A. Therefore, according to the cooling structure 41 of the fuel cell, the potential difference of coolant between the inflow section 44 and the outflow section 45 is 0V. Thus, no potential difference is developed between the outside and the first to the fourth fuel cell stacks 42A, 42B, 42C, and 42D, and disadvantages which may be caused by a potential difference with respect to outside the casing 43 which accommodates the first to the fourth fuel cell stacks 42A, 42B, 42C, and 42D can be prevented. The above structure can also be applied even when the fuel cell stacks are disposed in series in a laminating direction of the fuel cell films.

The present disclosure relates to subject matter contained in Japanese Patent Application No. TOKUGAN 2003-328244, filed on Sep. 19, 2003, the disclosure of which is expressly incorporated herein by reference in its entirety. The present invention may be embodied in other specific forms without departing from the spirit or essential characteristics thereof. The embodiments are therefore to be considered in all respects as illustrative and not restrictive, the scope of the present invention being indicated by the appended claims rather than by the foregoing description, and all changes which come within the meaning and range of equivalency of the claims are therefore intended to be embraced therein.

## Claims

1. A cooling structure (1; 21; 31; 41) for fuel cells including a first and a second fuel cell stack stacks (2, 3; 32A, 32B, 32C; 42A, 42B, 42C, 42D) each having a lamination composed of a plurality of laminated cellular fuel cells (9, 10), and held by end plates (7A, 7B, 8A, 8B), **characterized by**:
a first cooling circuit provided in a first fuel cell stack(2);
a second cooling circuit provided in a second fuel cell stack(3); and
a third cooling circuit(14) provided in an end plate (7B) of the first fuel cell stack(2), the third cooling circuit (14) comprising a branched inflow portion (14a; 34a; 44a) and a collecting outflow portion (14b; 35d; 45f) of a coolant, connected to the first and the second cooling circuit(4, 5).

2. The cooling structure as claimed in claim 1, **characterized by**:
a casing (11; 22; 33 : 43) configured to accommodate the first and the second fuel cell stack therein; and
a supply member (13a, 13b) of the coolant, disposed outside the casing, and connected to the third cooling circuit.

3. The cooling structure as claimed in claim 1 or 2, **characterized by**:
an electric connecting member (17; 27) configured for connection of the end plate to a reference potential.

4. The cooling structure as claimed in claim according to any one of claims 1 to 3, **characterized by**:
an insulating pipe member (6a, 6b) configured for the second and the third cooling circuit to communicate with each other.

5. The cooling structure as claimed in claim 4, **characterized in that**
the pipe member comprises (6a, 6b) a resilient pipe member.

6. The cooling structure as claimed in claim according to any one of claims 1 to 5, **characterized in that**
the end plate (7A, 7B, 8A, 8B) comprises a charge collector.
